# EUROPÄISCHE PATENTSCHRIFT

(11) **EP 0 315 999 B1**
(45) Veröffentlichungstag und Bekanntmachung des Hinweises auf die Patenterteilung: **28.04.1993**
(21) Anmeldenummer: 88118783.5
(22) Anmeldetag: 11.11.1988
(51) Int. Cl.: B29C 45/77

(54) **Verfahren zur reproduzierbaren Werkzeugfüllung mit Formmassen**
Method for reproducible mould filling with moulding materials
Procédé de remplissage de moule reproductible avec des matières à mouler

(30) Priorität: 11.11.1987 DE 3738248
(43) Veröffentlichungstag der Anmeldung: 17.05.1989
(73) Patentinhaber: VEREINIGUNG ZUR FÖRDERUNG DES INSTITUTS FÜR KUNSTSTOFFVERARBEITUNG IN INDUSTRIE UND HANDWERK, 52062 Aachen (DE)
(72) Erfinder: Fischbach, Gunther, Dipl.-Ing., D-5100 Aachen (DE)
(74) Vertreter: Meissner, Peter E., Dipl.-Ing.

(56) Entgegenhaltungen:
- DE-A- 2 127 465
- DE-A- 2 325 568
- FR-A- 2 228 600
- US-A- 3 792 134
- US-A- 3 840 312
- US-A- 3 859 400
- US-A- 3 977 255
- US-A- 4 222 725
- PATENT ABSTRACTS OF JAPAN, Band 6, Nr. 26 (M-176)[1124], 4. Dezember 1982; & JP-A-57 142 337 (ASAHI KASEI) 03-09-1982

## Beschreibung

Die Erfindung betrifft ein Verfahren zur reproduzierbaren Füllung eines Spritzgießwerkzeuges nach dem Anspruch 1.

Das Verfahren soll einerseits Überfüllung des Werkzeugs mit der Folge der Gratbildung reduzieren. Andererseits soll verhindert werden, daß unterfüllte Teile produziert werden.

Bei der Herstellung von Formteilen aus vernetzenden Formmassen, insbesondere mit dem Spritzgießverfahren ist die reproduzierbare Füllung der Form problematisch. Es kommt häufig zur Überfüllung mit der Folge der Gratbildung oder zur Unterfüllung mit der Folge, daß Ausschuß produziert wird. Die Prozeßführung ist bei modernen Spritzverfahren im allgemeinen eine zweistufige. Zunächst erfolgt eine geschwindigkeitsgeregelte Einspritzung, gefolgt von einer weg- oder druckabhängig geschalteten druckgeregelten Nachdruckphase.

Bekannt sind forminnendruckabhängige Umschaltungen von der Einspritzphase auf die Nachdruckphase - eventuell verzögert - (siehe Kunststoffberater 10/1981, Seite 24 bis 30) sowie Verfahren, die mit Anpassung des hydraulischen Nachdrucks aufgrund des integralen Forminnendrucks arbeiten (siehe FR-A-2 228 600 und US-A-3,859,400).

In der Nachdruckphase dient ein Massepolster zur Druckübertragung ins Werkzeug. Änderungen des effektiv in der Füllphase eingespritzten Volumens werden in der Nachdruckphase aus einem Massepolster ausgeglichen. Dies führt zu Masseverlagerungen während der Vernetzung und damit zu unnötiger Schädigung der Vernetzungsstrukturen.

Die DE-A-23 25 568 betrifft die Druckmessung in der Spritzform und eine entsprechend aufgebaute Steuerung bzw. einen Regelkreis, um den Druck in der Spritzform zu verändern oder auf Soll-Druckwerte einzuregeln. Die Steuerung bzw. Regelung des Druckes in der Spritzform setzt ein Massepolster der Formmasse im Spritzaggregat voraus. Gemäß der US-A-38 40 312 wird zur Vermeidung von Druckschwankungen in dem Formhohlraum der Spritzgießmaschine vorgeschlagen, die dem Formhohlraum zugeführte Füllmenge des Werkstoffes in Abhängigkeit von Druckwerten zu regeln, die unmittelbar in dem Formhohlraum abgenommen werden. Auch hier dient ein Massepolster zur Druckübertragung in das Werkzeug. Zur Qualitätsüberwachung von Kunststofferzeugnissen wird gemäß der US-A-37 92 134 eine Einrichtung eingesetzt, mit der der Maximaldruck des plastifizierten Spritzgutes überwacht und in regelmäßigen Abständen in bezug auf ein vorgewähltes Niveau ausgewertet werden kann, das für denjenigen Druck eines Erzeugnisses von guter Qualität repräsentativ ist. Nach Vergleich mit einem vorbestimmten Bezugsdruck kann eine Korrektureinstellung vorgenommen werden, die bei aufeinanderfolgenden Arbeitsspielen der Maschine die entwickelte Spritzkraft verändert. Mehr oder weniger Material wird von einem vor der Schnecke bzw. vor der Düse befindlichen Massepolster nachgefördert.

Der US-A-3,977,255 ist ein Regelverfahren zu entnehmen, bei welchem der Druckverlauf der Formmasse im Werkzeug punktuell aufgezeichnet wird. Es werden Korrekturmaßnahmen ergriffen, um die aktuellen Werte mit den theoretischen in Übereinstimmung zu bringen. Dies geschieht um unerwünschte Druckschwankungen im Werkzeug zu eliminieren. Patent Abstract of Japan, JP-A-57 142 337 beschreibt die Druckmessung und Drucksteuerung in dem Werkzeug einer Spritzgießmaschine. Im Werkzeug ist ein Meßwertgeber für den Druck angeordnet, dessen elektrisches Ausgangssignal verstärkt wird und einem Differenzialbildner zugeleitet wird. Dessen Ausgangssignal wird mit dem Signal eines Sollwertgebers verglichen. Von dem Vergleich hängt es ab, ob der Druck im Werkzeug reduziert oder erhöht wird.

Nach heutigem Stand der Technik müssen fast alle aus heiß vernetzender Formmasse gefertigten Formteile nach der Formgebung einem Entgratungsprozeß unterzogen werden. Die Ursachen liegen in Abweichungen des effektiv verspritzten Volumens vom Sollvolumen. Eine wesentliche Ursache ist der nicht reproduzierbare Rückfluß der Formmasse beim Fehlen einer Rückströmsperre. Die andere ist in den variierenden Fließeigenschaften der Formmassen zu sehen. Bei abweichender Viskosität weicht die von der Formmasse aufgenommene Spritzarbeit vom Sollwert ab und beeinflußt so das spezifische Volumen der Formmasse. Der Ausgleich von Volumenschwankungen durch ein Massepolster ist bei Formmasse mit kurzer zulässiger Verweilzeit im Plastifizieraggregat nicht möglich. Darüber hinaus wird durch Formmasseverlagerungen die Struktur der vernetzenden Moleküle geschädigt.

Der Erfindung liegt die Aufgabe zugrunde, Veränderungen des effektiv eingespritzten Formmassevolumens ohne Massepolster durch eine Regelung von Schuß zu Schuß auszugleichen. Diese Aufgabe wird durch ein Verfahren mit den Merkmalen des Patentanspruches 1 gelöst. Die Aufbereitung des Drucksignals kann gemäß den Ansprüchen 2 bis 6 erfolgen.

Die mit der Erfindung erzielbaren Vorteile bestehen darin, daß Nacharbeitskosten, Prüfkosten und Ausschußproduktion vermindert oder vermieden werden. Das Produktionsverfahren reagiert durch die Regelung flexibel auf schwankende Rohstoffeigenschaften.

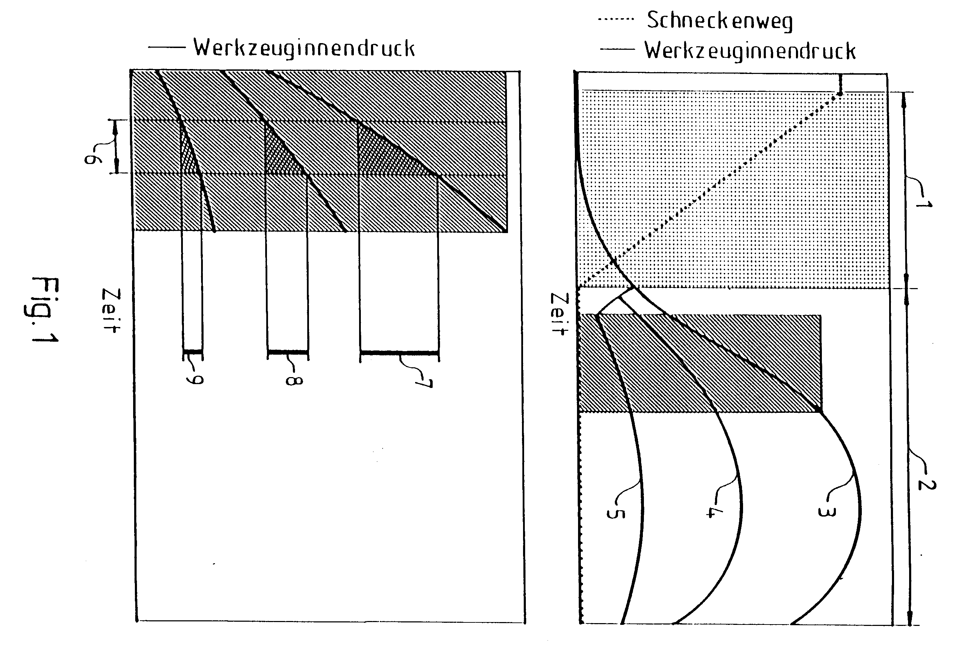

Ein Ausführungsbeispiel angewendet auf das Spritzgießen gemäß den Ansprüchen 1, 4 und 5 wird im folgenden dargestellt. Die zugrundeliegenden Effekte zeigt die Figur 1. Das Verfahren nutzt den Umstand, daß vernetzende Formmassen in der Regel in eine Form eingebracht werden, die im Vergleich zur Formmasse eine höhere Temperatur aufweist. Die Formmasse wird nach der Einspritzphase (1) in der Form aufgeheizt, um die Vernetzungsreaktion zu starten. Diese Aufheizung erfolgt zunächst in der sich der Füllung anschließenden Nachdruckphase (2). Durch die Aufheizung kommt es zu einer Volumenexpansion. Im Falle der vollständigen Formfüllung wird die Expansion verhindert, und es kommt zu einem starken Druckanstieg (3). Ist die Form unterfüllt, so findet die Expansion vollständig oder teilweise statt. Der Druckanstieg ist dann geringer (4) oder minimal (5).

Die Druckkurven unterscheiden sich insbesondere durch ihre Steigung. Diese Größe ist bei konstanten Temperaturbedingungen charakteristisch für den Füllzustand des Werkzeugs bei Ende der Füllphase. Bei einer konstanten Meßzeit (6) entspricht die zugehörige Druckdifferenz (7, 8, 9) der Steigung. Es ist damit eine quantitative auswertbare Meßgröße gegeben, die für eine von Schuß zu Schuß wirkende Regelung der Werkzeugfüllung benutzt wird. Bei einer digitalen Abtastregelung ist die konstante Meßzeit (6) die Abtastzeit. Bei dem Verfahren nach Unteranspruch 5 wird bei mehrfacher Abtastung das Maximum der Steigung als Meßgröße verwendet. Stellgröße der Regelung ist beim Spritzgießen der Dosierweg. Bei anderen Verfahren kann das Dosiergewicht oder das Dosiervolumen Verwendung finden.

## Patentansprüche

1. Verfahren zur reproduzierbaren Füllung eines Spritzgießwerkzeuges mit miteinander reagierenden Formmassenkomponenten, bei welchem das Werkzeug zum Starten der Reaktion eine höhere Temperatur als die Formmasse aufweist, für den Nachdruck vor der Schnecke kein Massepolster vorhanden ist, und bei welchem während der Reaktion bei jedem Schuß der Forminnendruck gemessen und dann das Gewicht oder das Volumen der beim folgenden Schuß einzuspritzenden Formmasse geändert wird.

2. Verfahren nach Anspruch 1,
**dadurch gekennzeichnet,**
daß die Druckdifferenz zwischen dem Forminnendruck bei Beginn der Nachdruckphase und einem danach auftretenden lokalen Minimum ermittelt und zur Steuerung oder Regelung benutzt wird.

3. Verfahren nach Anspruch 1,
**dadurch gekennzeichnet,**
daß der maximale, nach der Einspritzung auftretende, Forminnendruck ermittelt und zur Steuerung oder Regelung benutzt wird.

4. Verfahren nach Anspruch 1,
**dadurch gekennzeichnet,**
daß die Ableitung des Forminnendrucks nach der Zeit ermittelt wird und zur Steuerung oder Regelung benutzt wird.

5. Verfahren nach Anspruch 1 und 4,
**dadurch gekennzeichnet,**
daß der maximal auftretende Wert der Ableitung des Forminnendrucks nach der Zeit ermittelt und zur Steuerung oder Regelung benutzt wird.

6. Verfahren nach Anspruch 1,
**dadurch gekennzeichnet,**
daß ein Integral des Forminnendrucks ermittelt und zur Steuerung oder Regelung benutzt wird.

## Claims

1. A method for the reproducible filling of an injection-moulding mould with inter-reacting moulding material constituents, in which the mould is at a higher temperature than the moulding material for starting the reaction, no cushion of material is present for the post-moulding before the screw, and in which during the reaction the internal mould pressure is measured upon each shot and then the weight or the volume of moulding material to be injected upon the following shot is altered.

2. A method according to Claim 1, characterised in that the pressure difference between the internal mould pressure at the beginning of the subsequent pressure phase and a local minimum occurring thereafter is determined and is used for control or regulation.

3. A method according to Claim 1, characterised in that the maximum internal mould pressure which occurs after injection is determined and is used for control or regulation.

4. A method according to Claim 1, characterised in that the derivative of the internal mould pressure after time is determined and is used for control or regulation.

5. A method according to Claims 1 and 4, characterised in that the maximum value of the derivative of the internal mould pressure after time which occurs is determined and is used for control or regulation.

6. A method according to Claim 1, characterised in that an integral of the internal mould pressure is determined and is used for control or regulation.

## Revendications

1. Procédé pour le remplissage reproductible d'un outil de moulage par injection par des composants de matière à mouler réagissant ensemble, dans lequel l'outil présente, pour démarrer la réaction, une température plus élevée que la matière à mouler, aucun rembourrage de matière n'existe pour le maintien en pression avant la vis sans fin, et dans lequel, pendant la réaction, pour chaque cycle de moulage, la pression interne du moule est mesurée et, alors, le poids ou le volume de la matière à mouler à injecter lors du cycle de moulage suivant est modifié.

2. Procédé selon la revendication 1,
caractérisé en ce que la différence de pression entre la pression interne du moule au début de la phase de maintien en pression et un minimum local existant ensuite est détectée et est utilisée pour la commande ou le réglage.

3. Procédé selon la revendication 1,
caractérisé en ce que la pression interne maximale du moule, existant après l'injection, est détectée et est utilisée pour la commande ou le réglage.

4. Procédé selon la revendication 1,
caractérisé en ce que la dérivée de la pression interne du moule en fonction du temps est détectée et est utilisée pour la commande ou le réglage.

5. Procédé selon les revendications 1 et 4,
caractérisé en ce que la valeur maximale de la dérivée de la pression interne du moule en fonction du temps est détectée et est utilisée pour la commande ou le réglage.

6. Procédé selon la revendication 1,
caractérisé en ce qu'une intégrale de la pression interne moule est détectée et est utilisée pour la commande ou réglage.
